(19)

Europäisches Patentamt

European Patent Office

Office européen des brevets

(11) **EP 4 583 045 A1**

(12) **EUROPEAN PATENT APPLICATION**
published in accordance with Art. 153(4) EPC

(43) Date of publication:
**09.07.2025 Bulletin 2025/28**

(21) Application number: **23860401.1**

(22) Date of filing: **30.08.2023**

(51) International Patent Classification (IPC):
***G06T 7/00*** (2017.01)          ***G06T 7/60*** (2017.01)
***G06V 10/776*** (2022.01)

(52) Cooperative Patent Classification (CPC):
**G06T 7/00; G06T 7/60; G06V 10/776**

(86) International application number:
**PCT/JP2023/031462**

(87) International publication number:
**WO 2024/048639 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.09.2022 JP 2022139811**

(71) Applicant: **OMRON Corporation
Kyoto 600-8530 (JP)**

(72) Inventors:
• **NISHIMOTO UCHIDA, Shihori
  Kyoto-shi, Kyoto 600-8530 (JP)**
• **NISHIMOTO, Takashi
  Kyoto-shi, Kyoto 600-8530 (JP)**

(74) Representative: **Appelt, Christian W.
Boehmert & Boehmert
Anwaltspartnerschaft mbB
Pettenkoferstrasse 22
80336 München (DE)**

(54) **METHOD, LEARNING MODEL EVALUATION SYSTEM, AND PROGRAM**

(57)    Provided are a method, a learning model evaluation system, and a program that can appropriately evaluate a learning model for identifying a subject to be detected. A method includes: by a computer, inputting a subject image in which at least one subject to be detected is imaged to a learning model and acquiring first contour information indicating a contour of the at least one subject to be detected in the subject image; acquiring second contour information indicating a contour of the at least one subject to be detected and serving as a reference for evaluating the first contour information; acquiring a condition to be satisfied by the first contour information; and generating, based on the first contour information, the second contour information, and the condition, evaluation information in which performance of the learning model is evaluated.

[FIG. 4]

```
           START
             │
  ACQUIRE SUBJECT IMAGE ───── S401
             │
  GENERATE CONDITION
  SETTING SCREEN ──────────── S402
             │
  DISPLAY CONDITION
  SETTING SCREEN ──────────── S403
             │
  ACQUIRE AND STORE
  SECOND CONTOUR
  INFORMATION ─────────────── S404
             │
  ACQUIRE AND STORE
  THRESHOLD VALUE RELATED
  TO INTER-CONTOUR DISTANCE ─ S405
             │
  EVALUATION INFORMATION
  GENERATION PROCESS ──────── S406
             │
  GENERATE PREDICTED
  IMAGE ───────────────────── S407
             │
  GENERATE COMPARISON
  INFORMATION ─────────────── S408
             │
  GENERATE OUTPUT
  SCREEN INFORMATION ──────── S409
             │
  DISPLAY OUTPUT
  SCREEN ──────────────────── S410
             │
            END
```

EP 4 583 045 A1

**Description**

**TECHNICAL FIELD**

The present invention relates to a method, a learning model evaluation system, and a program.

**BACKGROUND OF INVENTION**

In product quality management, an inspection of a product is made to determine whether the product is a non-defective product or a defective product from the appearance of the product. In the appearance inspection, there is a method in which the inspection is carried out by imaging a subject and performing image processing on the image of the subject by a computer. As an example, PTL 1 describes an image processing method for an appearance inspection using contour lines of an inspection image and a teaching image.

**CITATION LIST**

**PATENT LITERATURE**

PTL 1: JP 2004-069698 A

**SUMMARY**

**TECHNICAL PROBLEM**

In image processing in the appearance inspection, segmentation processing for identifying pixels in which a subject exists may be performed. Segmentation processing allows for, for example, non-defective product determination based on the shape, contours, or the like of the subject. The segmentation processing may be performed using, for example, a learning model obtained by machine learning. A learning model for segmentation processing operates so as to output a result of classification indicating which object a pixel belongs to with regard to a certain input image. At this time, it is necessary to evaluate whether the classification by the learning model is appropriately performed. Examples of evaluation metrics for evaluating a learning model include a metric referred to as mean Intersection over Union (mIoU) based on an area in which pixels of a correct image and pixels predicted by the learning model overlap with regard to a certain classification.

In the appearance inspection, for example, in a case where a subject to be detected has an elongated shape, in a mask in which the subject to be detected has been classified by segmentation processing, the mask may stick out from the subject to be detected or a discontinuity of the mask may occur. In a case where such an incomplete mask is generated being based on the overlap of areas, it is difficult to appropriately evaluate the performance of the learning model used to generate the mask. This is because, for example, even in a case where part of the elongated object is missing, the metric of mIoU is unlikely to largely degrade when the mask sufficiently overlaps the subject to be detected.

The present disclosure, in one aspect, has been made in view of the above-described circumstances, and a subject thereof is to provide a method, a learning model evaluation system, and a program that can appropriately evaluate a learning model for identifying a subject to be detected.

**SOLUTION TO PROBLEM**

In order to solve the problems described above, the present disclosure employs the following configurations.

A method according to one aspect of the present disclosure includes: by a computer, inputting a subject image in which at least one subject to be detected is imaged to a learning model and acquiring first contour information indicating a contour of the at least one subject to be detected in the subject image; acquiring second contour information indicating a contour of the at least one subject to be detected and serving as a reference for evaluating the first contour information; acquiring a condition to be satisfied by the first contour information; and generating, based on the first contour information, the second contour information, and the condition, evaluation information in which performance of the learning model is evaluated.

According to the method mentioned above, the first contour information indicating the contour of the subject to be detected is evaluated based on the predetermined condition using the second contour information serving as the reference. Since the learning model can be evaluated based on the information regarding the contour of the subject to be detected, the learning model can be appropriately evaluated even when a prediction of a pixel corresponding to the subject to be detected by the learning model sticks out from the subject to be detected or is discontinued, for example.

In the method according to one aspect, the generating evaluation information may include: calculating, based on the first contour information and the second contour information, first inter-contour distance information indicating a distance from an individual point of at least one first contour indicated by the first contour information toward at least one second contour indicated by the second contour information and second inter-contour distance information indicating a distance from an individual point of the at least one second contour toward the at least one first contour; and generating the evaluation information based on the condition provided for inter-contour distance information based on the first inter-contour distance information and the second inter-contour distance information.

According to this method, based on the first inter-contour distance information with respect to the correct second contour viewed from the predicted first contour and the second inter-contour distance information with respect to the predicted first contour viewed from the correct second contour, it is possible to carry out an evaluation using both the correct answer viewed from the prediction and the prediction viewed from the correct answer. This makes it possible to appropriately evaluate the learning model.

In the method according to one aspect, the generating evaluation information may include: calculating a mean value and a standard deviation of distance data in the inter-contour distance information; and generating the evaluation information by taking the condition as a condition for the mean value and the standard deviation.

According to this method, since the mean value and the standard deviation are used, it is possible to evaluate the learning model in consideration of the entire contour while suppressing a local variation in the inter-contour distance, thereby making it possible to appropriately evaluate the learning model.

In the method according to one aspect, the condition for the mean value and the standard deviation may be the number of pixels indicating an allowable difference between the first contour and the second contour.

According to this method, the number of pixels, which is an intuitive condition for an evaluator of the learning model, can be used, and thus the convenience of the evaluator is improved.

In the method according to one aspect, acquiring second contour information may include acquiring the second contour information stored in a storage unit as information indicating a contour of at least one reference subject in an acquired image.

According to this method, for example, the evaluator can set the second contour information in advance, thereby improving the convenience of the evaluator.

The method according to one aspect may further include, by a computer, generating setting screen information for displaying a condition setting screen including the subject image for a user The acquiring a condition to be satisfied by the first contour information may include acquiring the condition from the user through the condition setting screen.

According to this method, since the user (evaluator) can set the condition while checking the image of the subject to be detected, the condition setting is appropriately made. This makes it possible to appropriately evaluate the learning model.

In the method according to one aspect, the acquiring second contour information may include acquiring the second contour information acquired from the user through the condition setting screen.

According to this method, since the user can set the second contour information based on his/her own judgment, the setting of the second contour information is appropriately made. This makes it possible to appropriately evaluate the learning model.

The method according to one aspect may further include generating output screen information for displaying, for the user, an output screen including the subject image, a predicted image based on the first contour information, and the evaluation information.

According to this method, since the user can grasp the evaluation result of the model while comparing the predicted image with the subject image, the convenience of the user is improved.

In the method according to one aspect, the generating evaluation information may further include generating comparison information indicating a difference between the first contour information and the second contour information.

According to this method, since the user can grasp the evaluation result of the model while checking the difference between the predicted image and the subject image, the convenience of the user is improved.

A learning model evaluation system according to one aspect of the present disclosure includes: a first contour information acquisition unit configured to input a subject image in which at least one subject to be detected is imaged to a learning model and acquire first contour information indicating a contour of the at least one subject to be detected in the subject image; a second contour information acquisition unit configured to acquire second contour information indicating a contour of the at least one subject to be detected and serving as a reference for evaluating the first contour information; a condition acquisition unit configured to acquire a condition to be satisfied by the first contour information; and an evaluation unit configured to generate, based on the first contour information, the second contour information, and the condition, evaluation information in which performance of the learning model is evaluated.

A program according to one aspect of the present disclosure causes a computer to execute: inputting a subject image in which at least one subject to be detected is imaged to a learning model and acquiring first contour information indicating a contour of the at least one subject to be detected in the subject image; acquiring second contour information indicating a contour of the at least one subject to be detected and serving as a reference for evaluating the first contour information; acquiring a condition to be satisfied by the first contour information; and generating, based on the first contour information, the second contour information, and the condition, evaluation information in which performance of the learning model is evaluated.

## ADVANTAGEOUS EFFECTS OF INVENTION

The present invention can provide a method, a learning model evaluation system, and a program that can appropriately evaluate a learning model for identifying a subject to be detected.

## BRIEF DESCRIPTION OF THE DRAWINGS

FIG. 1 is a diagram schematically illustrating a state in which a learning model evaluation system according to the present embodiment is utilized.
FIG. 2 is a block diagram of a learning model evaluation system 101 according to the present embodiment.
FIG. 3 is a diagram illustrating an example of contour information according to the present embodiment.
FIG. 4 is a flowchart for explaining an example of a process of the learning model evaluation system according to the present embodiment.
FIG. 5 is a diagram illustrating an example of a condition setting screen according to the present embodiment.
FIG. 6 is a diagram illustrating an example of a condition setting screen according to the present embodiment.
FIG. 7 is a flowchart for explaining an example of an evaluation information generation process according to the present embodiment.
FIG. 8 is a diagram for schematically explaining a calculation method of evaluation information according to the present embodiment.
FIG. 9 is a diagram for schematically explaining a calculation method of evaluation information according to the present embodiment.
FIG. 10 is a diagram for schematically explaining a calculation method of evaluation information according to the present embodiment.
FIG. 11 is a diagram for schematically explaining a calculation method of evaluation information according to the present embodiment.
FIG. 12 is a diagram for schematically illustrating a calculation method of evaluation information according to the present embodiment.
FIG. 13 is a diagram for explaining an example of an output screen according to the present embodiment.

## DESCRIPTION OF EMBODIMENTS

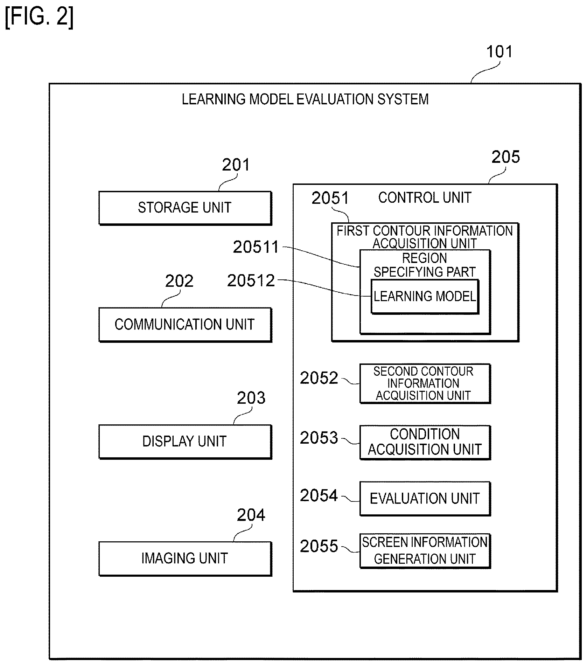

Hereinafter, the present invention will be described in the form of embodiments of the invention, but the invention according to the claims is not limited to the following embodiments. In addition, not all of the configurations described in the embodiments are essential to solve the problem. The following description will be given while acquiring the accompanying drawings. In the drawings, components denoted by the same reference signs have the same or similar configurations.

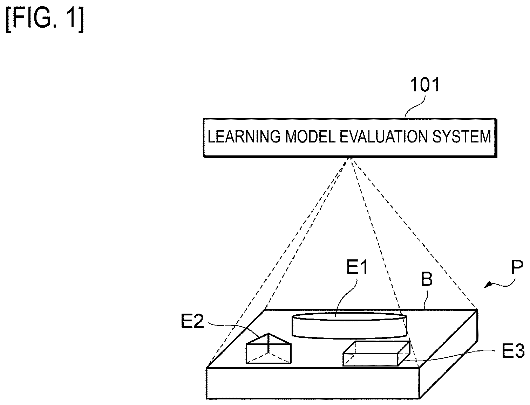

FIG. 1 schematically illustrates a state of model evaluation on a product P by a learning model evaluation system 101 according to the present embodiment. Here, as an example, the product P provided with elements E1, E2, and E3 on a substrate B is illustrated. The elements E1, E2, and E3 each correspond to a "subject to be detected" in the present disclosure. The number of elements provided on the substrate B may be one or more.
The learning model evaluation system 101 causes an imaging device to image a product and evaluates performance of a learning model for classifying a subject to be detected in the imaged image. In the evaluation using the learning model evaluation system 101, imaging of the product is not essential, and a separately imaged image of the product may be used.
An example of the configuration of the learning model evaluation system 101 will be described while acquiring FIG. 2. In the example illustrated in FIG. 2, the learning model evaluation system 101 includes a storage unit 201, a communication unit 202, a display unit 203, an imaging unit 204, and a control unit 205.
The learning model evaluation system 101 may be achieved by one device or may be achieved by a plurality of devices each having a function of the corresponding unit. For example, the learning model evaluation system 101 includes the imaging unit 204, and the imaging unit 204 is allowed not to be achieved as a device including other units. For example, the learning model evaluation system 101 can be achieved in such a manner as to include an imaging device that implements the imaging unit 204 and an information processing apparatus having functions other than the function of the imaging unit 204. The learning model evaluation system 101 may be achieved by a general-purpose desktop personal computer (PC), a tablet PC, or the like, in addition to an information processing apparatus designed exclusively for a service to be provided.

The storage unit 201 is, for example, an auxiliary storage device such as a hard disk drive or a solid state drive, and stores a program executed for processing by the control unit 205 and various types of information used in the learning model evaluation system 101.

The communication unit 202 is configured as, for example, an information processing unit that performs connection and data exchange with another system or information processing apparatus connected to the learning model evaluation system 101 through a network. The communication unit 202 is, for example, a wired local area network (LAN) module or a wireless LAN module, and is an interface for performing wired or wireless communication via a network. The communication unit 202 can transmit, for example, a determination result of a subject to another system or information processing apparatus under the control of the control unit 205.

The display unit 203 is, for example, a device for performing output, such as a display or a speaker.

The imaging unit 204 is, for example, an imaging device including an imaging element such as a complementary MOS (CMOS) or a charge coupled device (CCD). The imaging unit 204 acquires an image of the product P under the control of the control unit 205.

The control unit 205 includes a central processing unit (CPU), a random access memory (RAM), a read only memory (ROM) and the like, and controls constituent elements in accordance with information processing. The control unit 205 includes a first contour information acquisition unit 2051, a second contour information acquisition unit 2052, a condition acquisition unit 2053, an evaluation unit 2054, and a screen information generation unit 2055.

The first contour information acquisition unit 2051 includes a region specifying part 20511. The region specifying part 20511 acquires a subject image of the subject to be detected imaged by the imaging unit 204 and inputs the subject image to a learning model 20512. The learning model 20512 is, for example, a learning model that performs semantic segmentation or instance segmentation. The learning model 20512 is trained so as to identify a body corresponding to each pixel. When the subject image is input, the learning model 20512 specifies regions (pixels) corresponding to the elements E1, E2, and E3. The first contour information acquisition unit 2051 acquires first contour information as information indicating pixels corresponding to respective contours of the elements E1, E2, and E3 based on the regions specified by the region specifying part 20511. The learning model 20512 is illustrated in association with the region specifying part 20511 in FIG. 2, but may be stored in, for example, the storage unit 201. The learning model 20512 may be stored in another information processing apparatus connected to the learning model evaluation system 101 through the network.

The second contour information acquisition unit 2052 acquires second contour information indicating the contours of the subject to be detected and serving as a reference for evaluating the first contour information. The second contour information acquisition unit 2052 acquires the second contour information stored in advance in the storage unit 201 as information indicating pixels corresponding to the contours of a reference subject in the acquired image, for example. Alternatively, the second contour information acquisition unit 2052 may acquire the second contour information set by the user through a condition setting screen to be described later.

The condition acquisition unit 2053 acquires a condition to be satisfied by the first contour information. The condition acquisition unit 2053 acquires the condition from the user through the condition setting screen, for example. Alternatively, the condition acquisition unit 2053 may acquire a predetermined condition stored in the storage unit 201. The condition is provided with respect to the relationship between the first contour information and the second contour information, for example. Specifically, the condition is a condition related to a distance between the contours based on the first contour information and the second contour information, and is, for example, a condition based on a mean value and a standard deviation calculated based on the distance between the contours.

The evaluation unit 2054 generates, based on the first contour information, the second contour information, and the condition, evaluation information in which the performance of the learning model 20512 is evaluated. The generation process of the evaluation information will be described later.

The screen information generation unit 2055 displays the subject image acquired by the first contour information acquisition unit 2051 for the user, and generates information used to display the condition setting screen for setting the condition. The screen information generation unit 2055 generates output screen information used to display, for the user, an output screen including the subject image, a predicted image based on the first contour information, and the evaluation information generated by the evaluation unit 2054. The condition setting screen and the output screen will be described later.

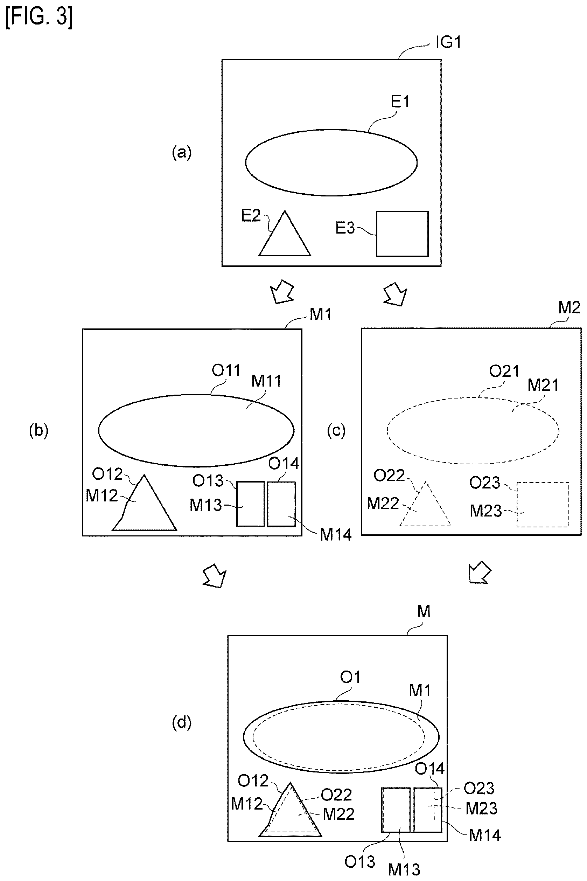

A subject to be evaluated in the learning model evaluation system 101 will be described with reference to FIG. 3. FIG. 3(a) illustrates a subject image IG1 acquired by the first contour information acquisition unit 2051. The subject image IG1 includes the elements E1, E2, and E3 as the subjects to be detected. The first contour information acquisition unit 2051 generates a mask M1 (first contour information) corresponding to the elements E1, E2, and E3, as illustrated in FIG. 3(b), through the processing by the first contour information acquisition unit 2051. The mask M1 includes instance masks M11, M12, M13, and M14. The instance masks are regions on the image, where the bodies included in the subject image IG1 are respectively identified. The instance masks M11, M12, M13, and M14 have contours O11 (first contour), O12, O13, and O14, respectively.

Regarding the subject image IG1, the second contour information acquisition unit 2052 acquires the mask M2 (second contour information) illustrated in FIG. 3(c). The mask M2 includes instance masks M21, M22, and M23. The instance masks M21, M22, and M23 have contours O21 (second contour), O22, and O23, respectively.

The contours O11, O12, O13, and O14 specified by the first contour information acquisition unit 2051 are different from the contours O21, O22, and O23 acquired by the second contour information acquisition unit 2052 as depicted in a mask M in FIG. 3(d), where the masks M1 and M2 are superimposed. In the learning model evaluation system 101, the learning model 20512 is evaluated based on distances between the contours O11, O12, O13, and O14 and the contours O21, O22, and O23.

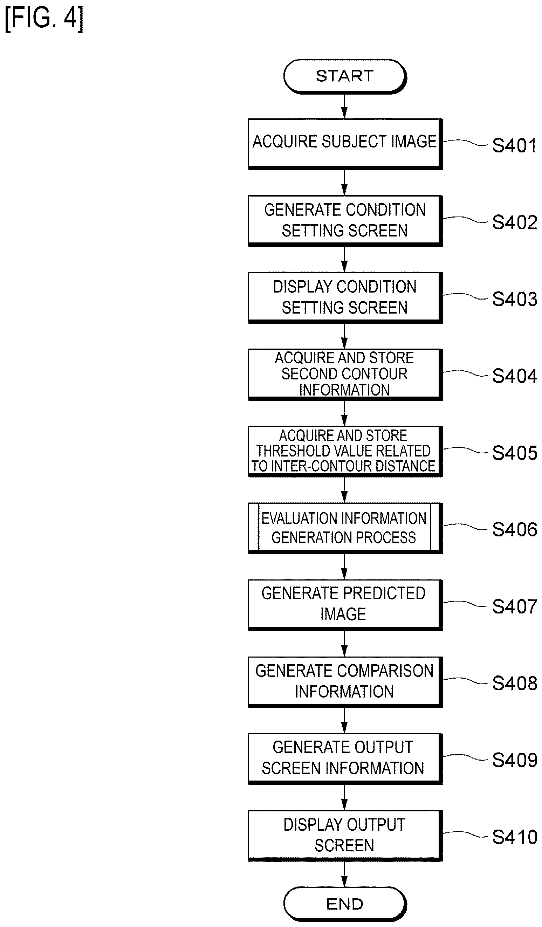

FIG. 4 is a flowchart illustrating an example of a process carried out by the learning model evaluation system 101.

In step S401, the first contour information acquisition unit 2051 acquires a subject image from the imaging unit 204 or the storage unit 201.

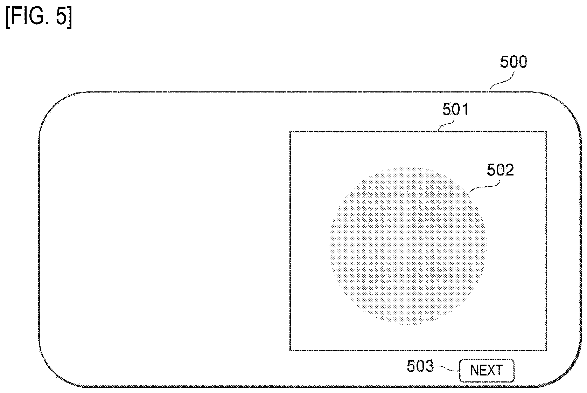

In step S402, the screen information generation unit 2055 generates setting screen information for displaying the condition setting screen. In step S403, the display unit 203 displays the condition setting screen. FIG. 5 illustrates an example of a condition setting screen 500. The condition setting screen 500 includes a subject image display region 501, and an image including a subject to be detected 502 is displayed in the subject image display region 501.

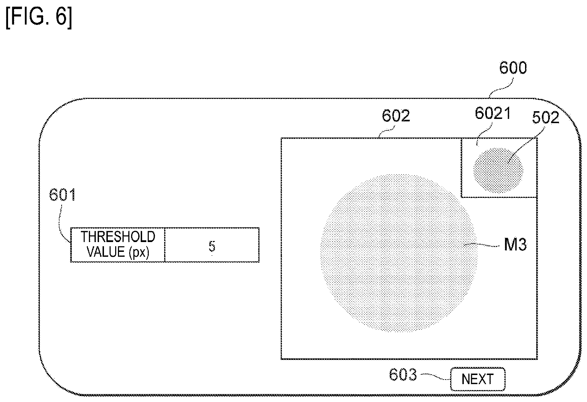

When the user selects a button 503 in the condition setting screen 500, the screen information generation unit 2055 updates the screen. An example of the updated screen is illustrated as a condition setting screen 600 in FIG. 6.

The condition setting screen 600 includes a threshold value input region 601, a mask display region 602, and a button 603. The expression "threshold value (px)" is displayed in the threshold value input region 601, and the user can input any number of pixels as the threshold value. In the example of FIG. 6, "5" pixels are input.

The mask display region 602 includes a subject image display region 6021. In the subject image display region 6021, an image of the subject to be detected 502 is displayed. The user can set an instance mask M3 corresponding to the subject to be detected 502 by performing an annotation operation of selecting a predetermined region in the subject to be detected 502. The user can set the instance mask M3 while referring to the image of the subject to be detected 502 displayed in the subject image display region 6021. As the instance mask M3, a mask stored in advance in the storage unit 201 may be displayed. When the input of the threshold value and the setting of the mask are completed, the user selects the button 603.

In step S404, the second contour information acquisition unit 2052 acquires the second contour information based on the instance mask M3 and stores the acquired second contour information in the storage unit 201.

In step S405, the condition acquisition unit 2053 acquires a threshold value related to an inter-contour distance set through the condition setting screen 600 and stores the acquired threshold value in the storage unit 201.

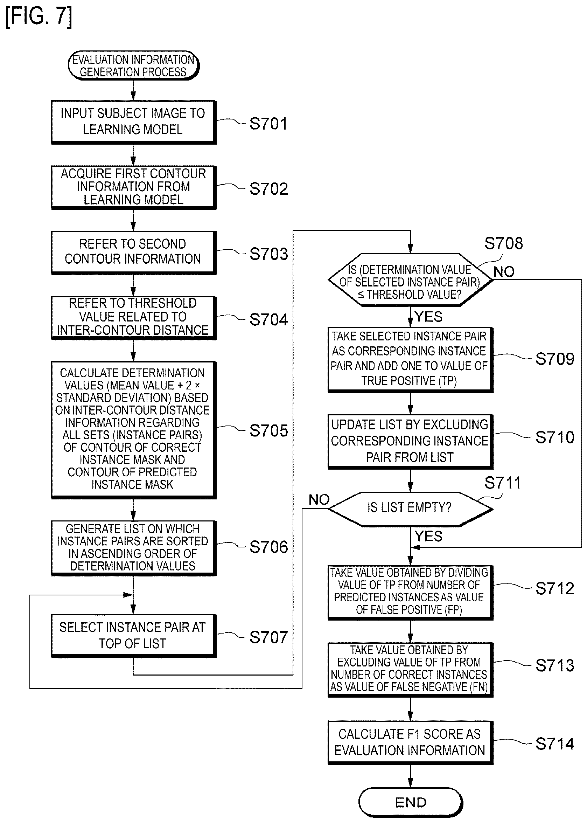

In step S406, the first contour information acquisition unit 2051 and the evaluation unit 2054 execute an evaluation information generation process. With reference to FIG. 7, the evaluation information generation process will be described.

In step S701, the first contour information acquisition unit 2051 inputs the subject image to the learning model 20512. In step S702, the first contour information acquisition unit 2051 acquires the first contour information from the region specifying part 20511.

In step S703, the evaluation unit 2054 refers to the second contour information acquired by the second contour information acquisition unit 2052.

In step S704, the evaluation unit 2054 refers to the threshold value related to the inter-contour distance stored in the storage unit 201.

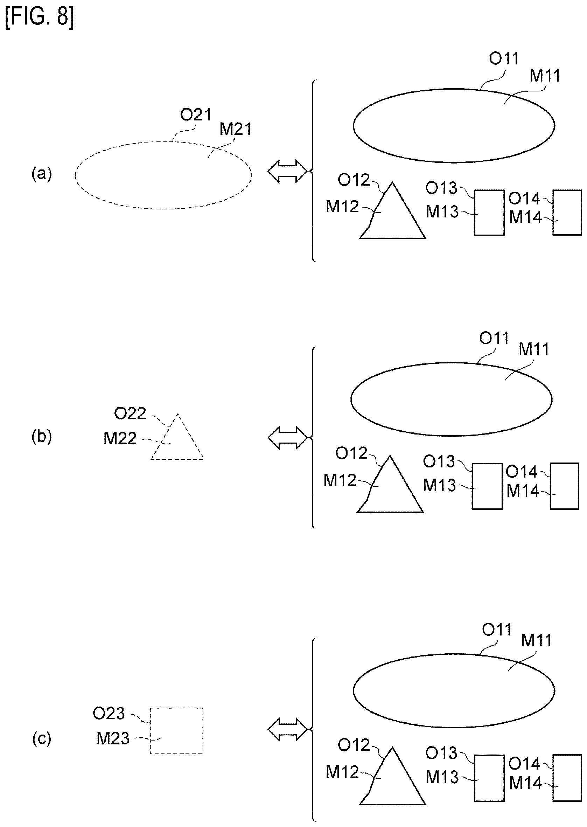

In step S705, the evaluation unit 2054 calculates determination values based on inter-contour distance information regarding all sets (instance pairs) of a contour of a correct instance mask and a contour of a predicted instance mask. This process will be described below with reference to FIGS. 8 to 11.

As illustrated in FIGS. 8(a), (b), and (c), the evaluation unit 2054 calculates determination values for all sets of a contour of a correct instance mask and a contour of a predicted instance mask. For example, as illustrated in FIG. 8(a), the predicted instance mask M21 is combined with the instance masks M11, M12, M13, and M14, and a determination value is calculated for each set.

The evaluation unit 2054 selects a correct instance mask in the second contour information. For example, in the mask M2 illustrated in FIG. 3(c), the correct instance mask is selected as the instance mask M21.

Subsequently, the evaluation unit 2054 selects a predicted instance mask in the first contour information. For example, in the mask M1 illustrated in FIG. 3(b), the predicted instance mask is selected as the instance mask M11.

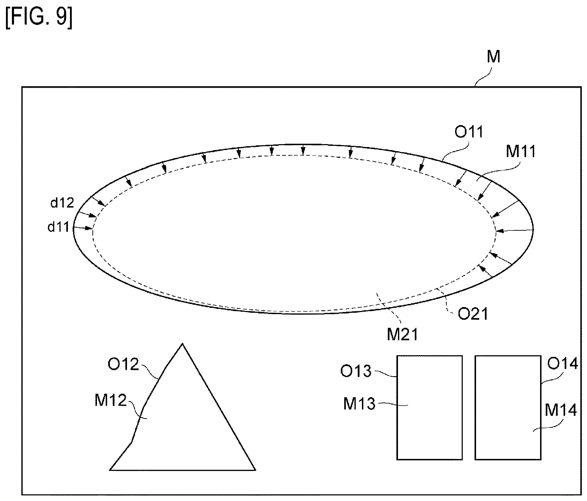

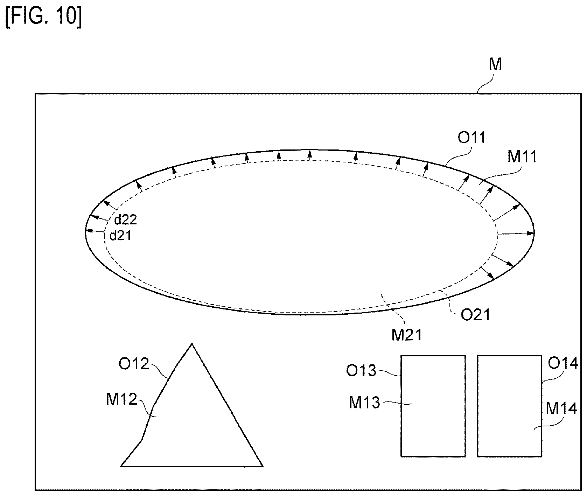

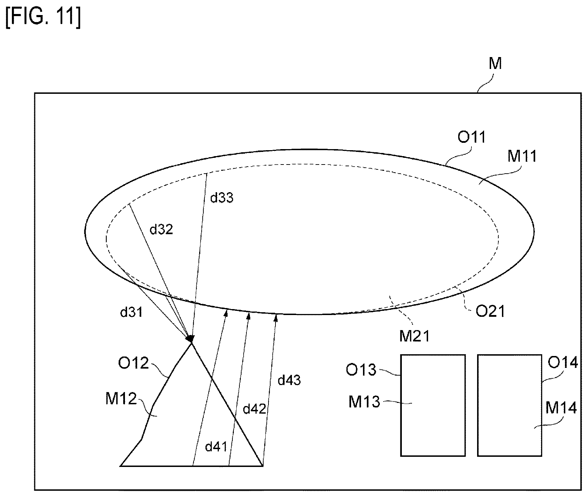

The evaluation unit 2054 calculates first inter-contour distance information from each point of the contour of the selected predicted instance mask to the contour of the selected correct instance mask. For example, a distance from each point of the contour O11 of the instance mask M11 to the contour O21 of the instance mask M21 is calculated. As illustrated in FIG. 9, the evaluation unit 2054 calculates a distance from each point (pixel) corresponding to the contour O11 to a point (pixel) at the shortest position corresponding to the contour O21. This calculation result is the first inter-contour distance information. In FIG. 9 and subsequent FIGS. 10 and 11, the instance masks M22, M23, and M24 are not illustrated.

The evaluation unit 2054 calculates second inter-contour distance information from each point of the contour of the selected correct instance mask to the contour of the selected predicted instance mask. As illustrated in FIG. 10, the evaluation unit 2054 calculates a distance from each point (pixel) corresponding to the contour O21 to a point (pixel) at the shortest position corresponding to the contour O11. This calculation result is the second inter-contour distance information. The points on the contours O11 and O21 may be selected at equal intervals or may be selected at optional intervals in accordance with the shapes.

The evaluation unit 2054 generates the inter-contour distance information obtained by combining the first inter-contour distance information and the second inter-contour distance information, based on the first inter-contour distance information and the second inter-contour distance information. For example, in the example of FIG. 9, assume that the distances from N points on the contour O11 to the contour O21 are respectively obtained as (d11, d12, ... d1N). In the example of FIG. 10, assume that the distances from M points on the contour O21 to the contour O11 are respectively obtained as (d21, d22, ... d2M). At this time, the inter-contour distance information is generated as distance data referred to as (d11, d12, ... d1N, d21, d22, ... d2M).

The evaluation unit 2054 calculates determination values based on the inter-contour distance information. For example, the evaluation unit 2054 calculates a value of (mean value + 2 × standard deviation) as the determination value with regard to the distance data indicated by the inter-contour distance information.

The evaluation unit 2054 repeats the calculation of the determination value for one instance pair and consequently calculates the determination values of all the instance pairs. For example, as illustrated in FIG. 11, inter-contour distance information with regard to instance pairs of the instance mask M21 and the instance mask M12 is similarly generated, and determination values are calculated.

Here, the inter-contour distance information with regard to the contour O21 and contour O12 is generated based on, for example, distances (d31, d32, d33, ...) from respective points on the contour O21 to the contour O12 and distances (d41, d42, d43, ...) from the respective points on the contour O12 to the contour O21. The inter-contour distance information (d31, d32, d33, ..., d41, d42, d43, ... ) has a larger distance value and larger variance than the inter-contour distance information (d11, d12, ... d1N, d21, d22, ... d2M) of the instance pair of O11 and O21. Accordingly, the determination value based on the inter-contour distance information of the instance pair of the contour O21 and the contour O12 is larger than the determination value based on the inter-contour distance information of the instance pair of the contour O21 and the contour O11.

The evaluation unit 2054 repeats the calculation of the determination value for each instance pair. In the example illustrated in FIG. 8, since there are four correct instance masks and three predicted instance masks, twelve instance pairs are generated, and twelve determination values are calculated.

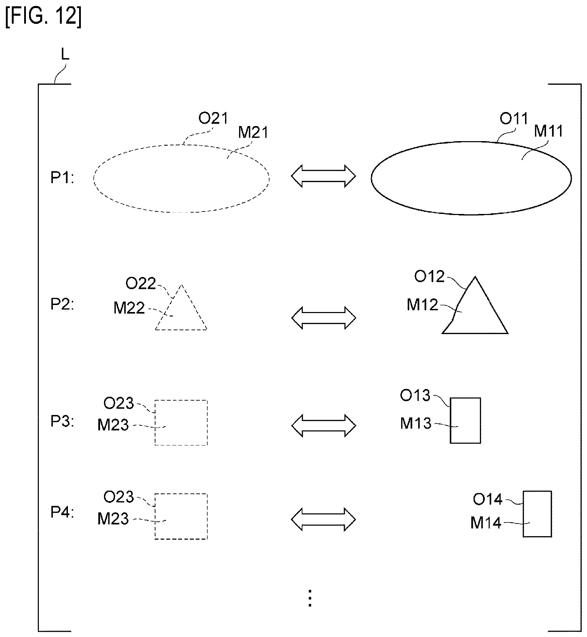

In step S706, the evaluation unit 2054 generates a list on which the instance pairs are sorted in ascending order of the determination values. Based on the example of FIG. 8, a list L, as schematically illustrated in FIG. 12, is generated. On the list L, an instance pair P1 of the instance mask M21 and the instance mask M11, an instance pair P2 of the instance mask M22 and the instance mask M12, an instance pair P3 of the instance mask M23 and the instance mask M13, and an instance pair P4 of the instance mask M23 and the instance mask M14 are indicated. The instance pairs P1, P2, P3, and P4 are arranged in ascending order of the determination values. Twelve instance pairs are arranged on the list L.

In step S707, the evaluation unit 2054 selects an instance pair at the top of the list.

In step S708, the evaluation unit 2054 judges whether the determination value of the selected instance pair is equal to or less than the threshold value. In this case, assume that the determination values of the instance pairs P1 and P2 are equal to or less than the threshold value, and the determination values of the instance pairs P3 and P4 are larger than the threshold value.

When affirmative judgment is made in step S708, in step S709, the evaluation unit 2054 takes the selected instance pair as a corresponding instance pair and adds one to a value of true positive (TP).

In step S710, the evaluation unit 2054 updates the list by excluding the corresponding instance pair from the list.

For example, when the instance pair P1 is selected, one is added to the value of **TP** by the processing in step S709. Subsequently, the instance pair P1 is deleted from the list L, and the instance pair P2 is moved up to the top of the list.

In step S711, the evaluation unit 2054 judges whether the list is empty. When negative judgment is made in step S711, pieces of processing from step S707 are repeated. When affirmative judgment is made in step S711, it is considered that the determination of all the instance pairs on the list is completed, and the process proceeds to step S712 and subsequent steps to be described later.

For example, when the instance pair P2 is present at the top of the list L, negative judgment is made in step S711. In the processing of step S707, the instance pair P2 is selected. In step S708, it is judged whether the determination value of the instance pair P2 is equal to or less than the threshold value. Since the determination value of the instance pair P2 is less than or equal to the threshold value, one is further added to the value of true positive in step S709. In step S710, the instance pair P2 is deleted from the list L and the instance pair P2 is moved up to the top of the list.

Similarly, with respect to the instance pair P3 as well, in step S708, it is judged whether the determination value of the instance pair P3 is equal to or less than the threshold value. Since the determination value of the instance pair P3 is larger than the threshold value, negative judgment is made in step S708.

When negative judgment is made in step S708, pieces of processing in step S712 and subsequent steps are carried out. Since the list is generated while sorting the instance pairs in ascending order of the determination values in step S706, the determination values of the instance pairs arranged after the instance pair P3 are also larger than the threshold value. Accordingly, once negative judgment is made in step S708, among the instance pairs on the list, no instance pair having true positive is included in the list. As discussed above, by the pieces of processing repeated until the determination value of the instance pair becomes larger than the threshold value, the totalizing of the true-positive instance pairs whose determination values are equal to or less than the threshold value is completed.

In step S712, the evaluation unit 2054 takes a value obtained by dividing the value of **TP** from the number of predicted instance masks as a value of false positive (FP). For example, in the examples of FIGS. 8 and 12, since the value of TP is "2" and the number of predicted instance masks is "4", the value of FP is "2".

Subsequently, in step S713, the evaluation unit 2054 takes a value obtained by dividing the value of TP from the number of correct instance masks as a value of false negative (FN). For example, in the examples of FIGS. 8 and 12, since the number of correct instance masks is "3", the value of FN is "1".

In step S712, the evaluation unit 2054 calculates, as the evaluation information, an F1 score for evaluating the learning model 20512, which predicts the first contour information with respect to the subject image. The F1 score is calculated based on the following equation.

[Equation 1]

$$F1 = \frac{2TP}{2TP + FN + FP}$$

When based on the example of FIG. 8, the F1 score is obtained by a calculation of F1 = (2 × 2)/(2 × 2 + 1 + 2) ≈ 0.57.

Returning to FIG. 4, in step S407, the screen information generation unit 2055 generates a predicted image indicating the instance mask including the first contour predicted by the region specifying part 20511 based on the first contour information acquired by the first contour information acquisition unit 2051 from the region specifying part 20511.

In step S408, based on the first contour information and the second contour information, the screen information generation unit 2055 generates comparison information indicating a difference between the instance mask based on the first contour information and the instance mask based on the second contour information.

In step S409, the screen information generation unit 2055 generates output screen information for displaying the output screen including the predicted image and the comparison information.

In step S410, the display unit 203 displays the output screen for the user.

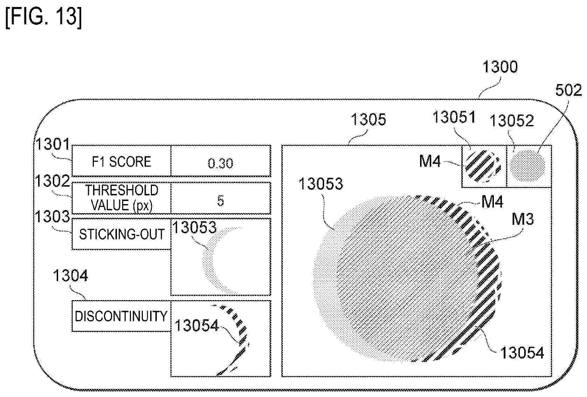

FIG. 13 illustrates an example of an output screen 1300. The output screen 1300 includes an F1 score display region 1301, a threshold value display region 1302, a sticking-out display region 1303, a discontinuity display region 1304, and a mask comparison region 1305.

The F1 score calculated by the evaluation unit 2054 is displayed in the F1 score display region 1301. In FIG. 13, "0.30" is displayed as an example of the F1 score. In the threshold value display region 1302, a threshold value of pixels set through the condition setting screen 600 is displayed.

In the sticking-out display region 1303, a sticking-out region where the second contour sticks out from the first contour is extracted and displayed based on the comparison information. In the discontinuity display region 1304, a discontinuity region where the first contour sticks out from the second contour is extracted and displayed based on the comparison information.

The mask comparison region 1305 includes a mask display region 13051 and a subject image display region 13052. In the mask display region 13051, an instance mask M4 indicating mask information acquired from the learning model 20512 by the first contour information acquisition unit 2051 is displayed. In the subject image display region 13052, a subject image including the subject to be detected 502 is displayed.

In the mask comparison region 1305, the instance mask M3 and the instance mask M4 are displayed at the center thereof. A sticking-out portion 13053 and a discontinuity portion 13054 in the mask comparison region 1305 are displayed in the sticking-out display region 1303 and the discontinuity display region 1304, respectively.

By checking the output screen 1300, the user can judge whether the mask generation of the subject image is appropriately performed by the learning model 20512. A numerical evaluation is enabled by the F1 score displayed in the F1 score display region 1301, and a visual evaluation is enabled by the information displayed in the sticking-out display region 1303, the discontinuity display region 1304, and the mask comparison region 1305. Thus, the user can efficiently evaluate the learning model 20512.

Here, main configurations of the method, the learning model evaluation system, and the program described above will be summarized.

Supplementary Note 1

A method including:

by a computer,
inputting a subject image (IG1) in which at least one subject to be detected (E1, E2, E3) is imaged to a learning model (20512) and acquiring first contour information indicating a contour (O11, O12, O13, O14) of the at least one subject to be detected in the subject image;
acquiring second contour information indicating a contour (O21, O22, O23) of the at least one subject to be detected and serving as a reference for evaluating the first contour information;
acquiring a condition to be satisfied by the first contour information; and
generating, based on the first contour information, the second contour information, and the condition, evaluation information in which performance of the learning model is evaluated.

Supplementary Note 2

The method according to supplementary note 1, wherein

the generating evaluation information includes
calculating, based on the first contour information and the second contour information, first inter-contour distance information indicating a distance from an individual point of at least one first contour (O11, O12, O13, O14) indicated by the first contour information toward at least one second contour (O21, O22, O23) indicated by the second contour information and second inter-contour distance information indicating a distance from an individual point of the at least one second contour toward the at least one first contour and
generating the evaluation information based on the condition provided for inter-contour distance information based on the first inter-contour distance information and the second inter-contour distance information.

Supplementary Note 3

The method according to supplementary note 2, wherein

the generating evaluation information includes
calculating a mean value and a standard deviation of distance data in the inter-contour distance information and generating the evaluation information by taking the condition as a condition for the mean value and the standard deviation.

Supplementary Note 4

The method according to supplementary note 3, wherein
the condition for the mean value and the standard deviation is the number of pixels indicating an allowable difference between the first contour and the second contour.

Supplementary Note 5

The method according to supplementary note 1, wherein
the acquiring second contour information includes acquiring the second contour information stored in a storage unit as information indicating a contour of a reference subject in an acquired image.

Supplementary Note 6

The method according to any one of supplementary notes 1 to 5 including by a computer,

generating setting screen information for displaying a condition setting screen including the subject image for a user, wherein
the acquiring a condition to be satisfied by the first contour information includes acquiring the condition from the user through the condition setting screen.

Supplementary Note 7

The method according to supplementary note 6, wherein
the acquiring second contour information includes acquiring the second contour information acquired from the user through the condition setting screen.

Supplementary Note 8

The method according to supplementary note 6, including

by a computer,
generating output screen information for displaying, for the user, an output screen including the subject image, a predicted image based on the first contour information, and the evaluation information.

Supplementary Note 9

The method according to supplementary note 8, wherein

the generating evaluation information further includes generating comparison information indicating a difference between the first contour information and
the second contour information, and
the output screen further includes the comparison information.

Supplementary Note 10

A learning model evaluation system, including:

a first contour information acquisition unit (2051) configured to input a subject image (IG1) in which at least one subject to be detected (E1, E2, E3) is imaged to a learning model (20512) and acquire first contour information indicating a contour (O11, O12, O13, O14) of the at least one subject to be detected in the subject image;
a second contour information acquisition unit (2052) configured to acquire second contour information indicating a contour (O21, O22, O23) of the at least one subject to be detected and serving as a reference for evaluating the first contour information;
a condition acquisition unit (2053) configured to acquire a condition to be satisfied by the first contour information; and
an evaluation unit (2054) configured to generate, based on the first contour information, the second contour information, and the condition, evaluation information in which performance of the learning model is evaluated.

Supplementary Note 11

A program for causing a computer to execute:

inputting a subject image (IG1) in which at least one subject to be detected (E1, E2, E3) is imaged to a learning model (20512) and acquiring first contour information indicating a contour (O1, O12, O13, O14) of the at least one subject to be detected in the subject image;
acquiring second contour information indicating a contour (O21, O22, O23) of the at least one subject to be detected and serving as a reference for evaluating the first contour information;
acquiring a condition to be satisfied by the first contour information; and
generating, based on the first contour information, the second contour information, and the condition, evaluation information in which performance of the learning model is evaluated.

**REFERENCE SIGNS LIST**

101 Learning model evaluation system, 201 Storage unit, 202 Communication unit, 203 Display unit, 204 Imaging unit, 205 Control unit, 2051 First contour information acquisition unit, 2052 Second contour information acquisition unit, 2053 Condition acquisition unit, 2054 Evaluation unit, 2055 Screen information generation unit

**Claims**

1. A method, comprising:

   by a computer,
   inputting a subject image in which at least one subject to be detected is imaged to a learning model and acquiring first contour information indicating a contour of the at least one subject to be detected in the subject image;
   acquiring second contour information indicating a contour of the at least one subject to be detected and serving as a reference for evaluating the first contour information;
   acquiring a condition to be satisfied by the first contour information; and
   generating, based on the first contour information, the second contour information, and the condition, evaluation information in which performance of the learning model is evaluated.

2. The method according to claim 1, wherein

   the generating evaluation information includes
   calculating, based on the first contour information and the second contour information, first inter-contour distance information indicating a distance from an individual point of at least one first contour indicated by the first contour information toward at least one second contour indicated by the second contour information and second inter-contour distance information indicating a distance from an individual point of the at least one second contour toward the at least one first contour, and
   generating the evaluation information based on the condition provided for inter-contour distance information based on the first inter-contour distance information and the second inter-contour distance information.

3. The method according to claim 2, wherein

   the generating evaluation information includes
   calculating a mean value and a standard deviation of distance data in the inter-contour distance information and generating the evaluation information by taking the condition as a condition for the mean value and the standard deviation.

4. The method according to claim 3, wherein
   the condition for the mean value and the standard deviation is the number of pixels indicating an allowable difference between the first contour and the second contour.

5. The method according to claim 1, wherein
   the acquiring second contour information includes acquiring the second contour information stored in a storage unit as information indicating a contour of at least one reference subject in an acquired image.

6. The method according to any one of claims 1 to 5, comprising

   by a computer,
   generating setting screen information for displaying a condition setting screen including the subject image for a user, wherein
   the acquiring a condition to be satisfied by the first contour information includes acquiring the condition from the user through the condition setting screen.

7. The method according to claim 6, wherein
   the acquiring second contour information includes acquiring the second contour information acquired from the user through the condition setting screen.

8. The method according to claim 6, comprising

   by a computer,

generating output screen information for displaying, for the user, an output screen including the subject image, a predicted image based on the first contour information, and the evaluation information.

9. The method according to claim 8, wherein

the generating evaluation information further includes generating comparison information indicating a difference between the first contour information and the second contour information, and
the output screen further includes the comparison information.

10. A learning model evaluation system, comprising:

a first contour information acquisition unit configured to input a subject image in which at least one subject to be detected is imaged to a learning model and acquire first contour information indicating a contour of the at least one subject to be detected in the subject image;
a second contour information acquisition unit configured to acquire second contour information indicating a contour of the at least one subject to be detected and serving as a reference for evaluating the first contour information;
a condition acquisition unit configured to acquire a condition to be satisfied by the first contour information; and
an evaluation unit configured to generate, based on the first contour information, the second contour information, and the condition, evaluation information in which performance of the learning model is evaluated.

11. A program for causing a computer to execute:

inputting a subject image in which at least one subject to be detected is imaged to a learning model and acquiring first contour information indicating a contour of the at least one subject to be detected in the subject image;
acquiring second contour information indicating a contour of the at least one subject to be detected and serving as a reference for evaluating the first contour information;
acquiring a condition to be satisfied by the first contour information; and
generating, based on the first contour information, the second contour information, and the condition, evaluation information in which performance of the learning model is evaluated.

[FIG. 1]

[FIG. 2]

101

LEARNING MODEL EVALUATION SYSTEM

201

STORAGE UNIT

205

CONTROL UNIT

2051

FIRST CONTOUR INFORMATION ACQUISITION UNIT

20511

REGION SPECIFYING PART

202      20512

COMMUNICATION UNIT

LEARNING MODEL

2052

SECOND CONTOUR INFORMATION ACQUISITION UNIT

203

DISPLAY UNIT

2053

CONDITION ACQUISITION UNIT

2054

EVALUATION UNIT

204

IMAGING UNIT

2055

SCREEN INFORMATION GENERATION UNIT

EP 4 583 045 A1

[FIG. 3]

15

[FIG. 4]

START

ACQUIRE SUBJECT IMAGE — S401

GENERATE CONDITION
SETTING SCREEN — S402

DISPLAY CONDITION
SETTING SCREEN — S403

ACQUIRE AND STORE
SECOND CONTOUR
INFORMATION — S404

ACQUIRE AND STORE
THRESHOLD VALUE RELATED
TO INTER-CONTOUR DISTANCE — S405

EVALUATION INFORMATION
GENERATION PROCESS — S406

GENERATE PREDICTED
IMAGE — S407

GENERATE COMPARISON
INFORMATION — S408

GENERATE OUTPUT
SCREEN INFORMATION — S409

DISPLAY OUTPUT
SCREEN — S410

END

[FIG. 5]

[FIG. 6]

[FIG. 7]

EVALUATION INFORMATION
GENERATION PROCESS

INPUT SUBJECT IMAGE TO
LEARNING MODEL — S701

ACQUIRE FIRST CONTOUR
INFORMATION FROM
LEARNING MODEL — S702

REFER TO SECOND
CONTOUR INFORMATION — S703

REFER TO THRESHOLD
VALUE RELATED TO
INTER-CONTOUR DISTANCE — S704

CALCULATE DETERMINATION
VALUES (MEAN VALUE + 2 ×
STANDARD DEVIATION) BASED
ON INTER-CONTOUR DISTANCE
INFORMATION REGARDING
ALL SETS (INSTANCE PAIRS)
OF CONTOUR OF CORRECT
INSTANCE MASK AND
CONTOUR OF PREDICTED
INSTANCE MASK — S705

GENERATE LIST ON WHICH
INSTANCE PAIRS ARE SORTED
IN ASCENDING ORDER OF
DETERMINATION VALUES — S706

SELECT INSTANCE PAIR AT
TOP OF LIST — S707

S708
IS (DETERMINATION VALUE
OF SELECTED INSTANCE PAIR)
≤ THRESHOLD VALUE? — NO

YES

TAKE SELECTED INSTANCE PAIR
AS CORRESPONDING INSTANCE
PAIR AND ADD ONE TO VALUE OF
TRUE POSITIVE (TP) — S709

UPDATE LIST BY EXCLUDING
CORRESPONDING INSTANCE
PAIR FROM LIST — S710

S711
NO — IS LIST EMPTY?

YES

TAKE VALUE OBTAINED BY DIVIDING
VALUE OF TP FROM NUMBER OF
PREDICTED INSTANCES AS VALUE
OF FALSE POSITIVE (FP) — S712

TAKE VALUE OBTAINED BY
EXCLUDING VALUE OF TP FROM
NUMBER OF CORRECT INSTANCES
AS VALUE OF FALSE NEGATIVE (FN) — S713

CALCULATE F1 SCORE AS
EVALUATION INFORMATION — S714

END

[FIG. 8]

[FIG. 9]

[FIG. 10]

[FIG. 11]

[FIG. 12]

[FIG. 13]

## INTERNATIONAL SEARCH REPORT

International application No.

**PCT/JP2023/031462**

| A. | CLASSIFICATION OF SUBJECT MATTER |
|---|---|

*G06T 7/00*(2017.01)i; *G06T 7/60*(2017.01)i; *G06V 10/776*(2022.01)i
FI:    G06T7/00 350B; G06T7/60 300A; G06V10/776

According to International Patent Classification (IPC) or to both national classification and IPC

| B. | FIELDS SEARCHED |
|---|---|

Minimum documentation searched (classification system followed by classification symbols)

G06T7/00; G06T7/60; G06V10/776

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2021-2338 A (STRAXCORP PTY LTD) 07 January 2021 (2021-01-07) paragraphs [0013], [0015], [0065], [0070], [0072] | 1, 6-11 |
| A | | 2-5 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **27 October 2023** | **07 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/031462**

| Patent document cited in search report | | | Publication date (day/month/year) | Patent family member(s) | Publication date (day/month/year) |
|---|---|---|---|---|---|
| JP | 2021-2338 | A | 07 January 2021 | US 2020/0401854 A1 paragraphs [0011]-[0018], [0020], [0098], [0103], [0105] EP 3754597 A2 | |

Form PCT/ISA/210 (patent family annex) (January 2015)

## EP 4 583 045 A1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004069698 A